# EUROPÄISCHE PATENTSCHRIFT

(11) **EP 3 534 826 B1**
(45) Veröffentlichungstag und Bekanntmachung des Hinweises auf die Patenterteilung: **19.08.2020**
(21) Anmeldenummer: 17797907.7
(22) Anmeldetag: 03.11.2017
(51) Int. Cl.: A61C 13/00, A61C 7/16, A61C 5/20, A61C 5/30, A61C 5/77, A61C 13/08

(54) **VERFAHREN ZUR KONSTRUKTION MINDESTENS EINES ZAHNERSATZTEILS ODER EINES BRACKETS MIT MINDESTENS EINER KLEBEFLÄCHE**
METHOD FOR CONSTRUCTING AT LEAST ONE DENTAL PROSTHETIC PART OR A BRACKET HAVING AT LEAST ONE ADHESIVE SURFACE
PROCÉDÉ DE RÉALISATION D'AU MOINS UN ÉLÉMENT PROTHÉTIQUE DENTAIRE OU VERROU ORTHODONTIQUE DOTÉ D'AU MOINS UNE SURFACE ADHÉSIVE

(30) Priorität: 03.11.2016 DE 102016221541
(43) Veröffentlichungstag der Anmeldung: 11.09.2019
(73) Patentinhaber: Sirona Dental Systems GmbH, 64625 Bensheim (DE)
(72) Erfinder: NOWARRA, Oliver, 69181 Leimen (DE); PFEIFFER, Joachim, 64625 Bensheim (DE); FORNOFF, Peter, 64385 Reichelsheim (DE)
(74) Vertreter: Özer, Alpdeniz
(86) Internationale Anmeldenummer: PCT/EP2017/078122
(87) Internationale Veröffentlichungsnummer: WO 2018/083207

(56) Entgegenhaltungen:
- WO-A2-2006/120254
- DE-A1- 10 300 010
- US-A- 3 760 502
- US-A- 4 604 057
- US-A1- 2004 072 118
- US-A1- 2010 028 835
- US-A1- 2016 302 887

## Beschreibung

### Technisches Gebiet

Die Erfindung betrifft ein Verfahren zur Konstruktion mindestens eines Zahnersatzteils oder eines Brackets mit mindestens einer Klebefläche, wobei ein 3D-Modell des Zahnersatzteils konstruiert wird.

### Stand der Technik

Aus dem Stand der Technik sind mehrere Verfahren zur Konstruktion und Herstellung von Zahnersatzteilen bekannt.

US 4,604,057 offenbart ein Bracket für eine kieferorthopädische Behandlung, der auf einen Zahn geklebt wird, wobei an der Klebefläche mehrere Vertiefungen angeordnet sind.

US 2010/028835 A1 offenbart eine Zahnkrone, die unter Verwendung eines CAD/CAM-Herstellungsverfahren hergestellt wird, wobei die Innenfläche der Zahnkrone Vertiefungen in Form von Nuten oder kurze Segmente aufweist.

DE 103 00 010 A1 offenbart ein Bracket zur Befestigung an einer Zahnoberfläche.

US 3,760,502 offenbart ein Veneer zum Befestigen an einem Zahn, wobei auf der Rückseite des Veneers Vertiefungen angeordnet sind.

US 2016/302887 A1 offenbart ein Bracket für eine kieferorthopädische Behandlung, wobei auf der Klebefläche des Brackets eine Aussparung angeordnet ist, die als Gegenstück eines auf dem Zahn geklebten Blättchen geformt ist.

WO 2006/120254 A2 offenbart ein Verfahren zur Herstellung eines Zahnersatzteils, wobei an der Klebefläche des Zahnersatzteils mindestens ein Vorsprung angeordnet ist, um einen Spalt zu erzeugen.

DE 10 2005 023 106 A1 offenbart ein Verfahren zur Herstellung eines Zahnersatzteils, wobei das Gerüst durch eine Klebeverbindung mit dem Verblendteil verbunden wird. In einer Verbindungsschicht ist ein Spalt vorgesehen, welcher mit einem Verbindungsmittel gefüllt wird. Die Abstandselemente des Verblendteils stehen im direkten Kontakt mit dem Gerüst.

DE 10 2006 044 215 B4 offenbart ein Verfahren zur Optimierung einer Einschubrichtung eines 3D-Modells eines Zahnersatzteils, wobei die abgeschotteten Bereiche auf der Oberfläche der Präparationen farblich markiert werden.

US 2004/0072118 A1 offenbart ein Bracket mit hinterschneidenden Strukturen auf seiner Klebefläche.

Ein Nachteil der bekannten Zahnersatzteile mit Klebeflächen besteht darin, dass die Klebeverbindung der Zahnersatzteile nicht stabil genug ist, um eine dauerhafte Druckbelastung auszuhalten. In der Praxis kommt es daher vor, dass die Klebeverbindung wegen der dauerhaften Druckbelastung bricht oder sich löst.

Die Aufgabe der vorliegenden Erfindung besteht daher darin ein Verfahren und ein Zahnersatzteil mit einer Klebefläche bereitzustellen, das eine stabile Klebeverbindung gewährleistet.

### Darstellung der Erfindung

Die Erfindung wird durch die nachstehenden unabhängigen Patentansprüche definiert. Bevorzugte Ausführungsformen sind in den abhängigen Ansprüchen definiert.

Die Erfindung betrifft ein Verfahren zur Konstruktion min-destens eines Zahnersatzteils oder eines Brackets mit mindestens einer Klebefläche, wobei ein 3D-Modell des Zahnersatzteils konstruiert wird. An der Klebefläche des 3D-Modells werden dabei Vertiefungen konstruiert.

Das Zahnersatzteil kann ein beliebiges Zahnersatzteil, wie eine Vollkrone, eine Teilkrone, ein Veneer für einen Frontzahn, ein Veneer für einen Eckzahn, eine Gerüst-Verblendung, ein Multi-Unit-Zahnersatzteil oder eine Ti-Base mit aufzusetzenden Kronen sein. Eine Gerüst-Verblendung umfasst dabei ein Gerüst, beispielsweise aus einer Edelmetalllegierung oder eine Nicht-Edelmetalllegierung und eine Verblendung, beispielsweise aus einer Keramik, die mit dem Gerüst verklebt wird. Das Gerüst kann dabei mehrere Zähne umfassen, wobei auf jedes Gerüstteil eine einzelne Verblendung eines künstlichen Zahns aufgesetzt und verklebt wird. Die Innenfläche der Verblendung weist also eine erste Klebefläche auf, wobei das Gerüst eine zweite Klebefläche aufweist. Die Klebeverbindung wird also zwischen der ersten Klebefläche und der zweiten Klebefläche hergestellt.

Falls das Zahnersatzteil eine Vollkrone ist, die mit einer Mesostruktur, wie einem Abutment, verbunden wird, weist die Innenfläche der Vollkrone eine erste Klebefläche auf, wobei die Außenfläche der Mesostruktur eine zweite Klebefläche aufweist.

Falls das Zahnersatzteil ein Veneer eines Frontzahns ist, weist das Veneer eine erste Klebefläche auf, wobei die Klebeverbindung direkt zwischen der Klebefläche und der Zahnsubstanz hergestellt wird. Bei der Verwendung einer Ti-Base als Bestandteil des Zahnersatzteils wird die Ti-Base, beispielsweise aus einer Titanlegierung, mit einem gesetzten Implantat verbunden, wobei auf die Ti-Base entweder eine Mesostruktur, wie ein Abutment, als Zwischenteil oder direkt eine Vollkrone geklebt wird. Die Innenfläche der Mesostruktur bzw. die Innenfläche der Vollkrone weist dann eine erste Klebefläche auf, wobei die Außenfläche der Ti-Base eine zweite Klebefläche aufweist, wobei eine erste Klebeverbindung zwischen der Ti-Base und der Innenfläche der Mesostruktur und anschließend eine zweite Klebeverbindung zwischen der Außenfläche der Mesostruktur und der Innenfläche der Vollkrone hergestellt wird.

Das Verfahren kann auch auf ein Bracket angewendet werden, wobei die Klebefläche des Brackets mit Vertiefungen versehen wird, wobei die Klebeverbindung zwischen der Klebefläche des Brackets und der Oberfläche des Zahns hergestellt wird.

Das 3D-Modell des Zahnersatzteils umfasst alle Informationen über die Oberfläche des herzustellenden Zahnersatzteils und wird mittels einer herkömmlichen CAD-Vorrichtung konstruiert.

Ein Vorteil dieses Verfahrens besteht darin, dass durch die Vertiefungen an der Klebefläche des Zahnersatzteils die Oberfläche der Klebefläche vergrößert wird und damit die Stabilität der Klebeverbindung verbessert wird.

Ein weiter Vorteil dieses Verfahrens besteht darin, dass die Vertiefungen an der Klebefläche bereits bei der Planung des 3D-Modells hinzugefügt werden, sodass die Herstellung des Zahnersatzteils mit den Vertiefungen an der Klebefläche automatisch mittels einer Herstellungsvorrichtung, wie einer CAD/CAM-Vorrichtung oder mittels eines 3D-Druckers erfolgen kann.

Vorteilhafterweise kann durch die Vertiefungen die Oberfläche der Klebefläche des 3D-Modells vergrößert werden. Durch die vergrößerte Oberfläche der Klebefläche des 3D-Modells wird also die Stabilität der Klebeverbindung verbessert. Denn bei der Verklebung des Zahnersatzteils wird ein Klebstoff auch in die Vertiefungen hineingedrückt, sodass beim Aushärten des Klebstoffs Trägerstrukturen gebildet werden.

Vorteilhafterweise können bestimmte Flächenbereiche der Klebefläche des 3D-Modells ausgewählt werden, die mit den Vertiefungen versehen werden.

Dadurch werden also bestimmte Flächenbereiche der Klebefläche ausgewählt, die mit den Vertiefungen versehen werden. Diese Flächenbereiche weisen dann eine stabilere Klebeverbindung auf, sodass das Zahnersatzteil höhere Zugbelastungen und Druckbelastungen aufnehmen kann.

Vorteilhafterweise kann die Auswahl der Flächenbereiche manuell durch einen Benutzer oder automatisch mittels einer Recheneinheit erfolgen.

Die Flächenbereiche können also beispielsweise durch einen Benutzer ausgewählt werden, wobei der Benutzer die Flächenbereiche am 3D-Modell auswählt, das mittels einer Anzeigevorrichtung wie eines Monitors angezeigt wird.

Vorteilhafterweise kann bei der automatischen Auswahl der Flächenbereiche eine Einschubachse des 3D-Modells bestimmt werden, wobei eine Flächennormale der Klebefläche des 3D-Modells bestimmt wird, wobei Flächenbereiche der Klebefläche ausgewählt werden, die höchstens einen festgelegten Wert eines Winkels zwischen der Einschubachse und der Flächennormale dieser Flächenbereiche aufweisen.

Die Einschubachse des 3D-Modells entspricht einer Einschubrichtung beim Aufsetzen des herzustellenden Zahnersatzteils auf die vorgesehene Mesostruktur bzw. auf den vorgesehenen Zahnstumpf.

Dadurch werden also diejenigen Flächenbereiche mit Vertiefungen versehen, die bei einer Druckbelastung bzw. einer Zugbelastung am stärksten beansprucht werden. Bei Backenzähnen entspricht eine Kraftrichtung der Druckbelastung bei einer Kaubewegung in etwa der Ausrichtung der Einschubachse.

Vorteilhafterweise kann der festgelegte Wert des Winkels zwischen der Einschubachse und der Flächennormale der Flächenbereiche höchstens 60° betragen.

Es werden also nur diejenigen Flächenbereiche als Klebefläche ausgewählt, die höchstens einen Winkel von 60° zwischen der Einschubachse und der Flächennormale aufweisen. Durch den festgelegten Winkel von höchsten 60° werden also die besonders beanspruchten Flächenbereiche der Klebefläche ausgewählt.

Vorteilhafterweise kann bei der automatischen Auswahl der Flächenbereiche eine Flächennormale der Klebefläche des 3D-Modells bestimmt werden, wobei eine Kraftrichtung einer auf das geplante Zahnersatzteil einwirkenden Kraft bestimmt wird, wobei Flächenbereiche der Klebefläche ausgewählt werden, die höchstens einen festgelegten Wert eines Winkels zwischen der Kraftrichtung und der Flächennormale dieser Flächenbereiche aufweisen.

Die auf das Zahnersatzteil einwirkende Kraft entsteht beispielweise bei einer Kaubewegung, wobei insbesondere bei Backenzähnen die Kraftrichtung dieser Kraft nahezu der Ausrichtung der Einschubachse entsprechen kann. Bei der Auswahl werden also besonders beanspruchte Flächenbereiche der Klebefläche mit Vertiefungen versehen, um in diesen Flächenbereichen eine höhere Stabilität der Klebeverbindung herzustellen.

Vorteilhafterweise kann der festgelegte Wert des Winkels zwischen der Kraftrichtung und der Flächennormale der Flächenbereiche höchstens 60° betragen.

Dadurch werden also besonders beanspruchte Flächenbereiche ausgewählt.

Vorteilhafterweise können bei der automatischen Auswahl nur Flächenbereiche der Klebefläche ausgewählt werden, bei denen das 3D-Modell des Zahnersatzteils eine Dicke aufweist, die größer als eine festgelegte minimale Wandstärke ist.

Dadurch wird gewährleistet, dass die Vertiefungen nur an Bereichen mit einer ausreichenden Wandstärke konstruiert werden.

Vorteilhafterweise kann die festgelegte minimale Wandstärke 500 µm betragen.

Bei dieser minimalen Wandstärke wird die erforderliche mechanische Stabilität des herzustellenden Zahnersatzteils gewährleistet.

Vorteilhafterweise kann die Verteilung der Vertiefungen innerhalb der ausgewählten Flächenbereiche gleichmäßig sein oder abhängig von einer auf das geplante Zahnersatzteil einwirkenden Kraft sein.

Bei einer gleichmäßigen Verteilung der Vertiefungen wird eine gleichmäßige Verstärkung der Klebeverbindung erreicht. Bei einer Verteilung der Vertiefungen, die abhängig von der einwirkenden Kraft ist, wird in Bereichen der Klebeflächen mit einer höheren einwirkenden Kraft die Dichte der konstruierten Vertiefungen verstärkt.

Vorteilhafterweise kann bei der Konstruktion der Vertiefungen eine Form, eine Tiefe oder eine Größe einer einzelnen Vertiefung manuell durch einen Benutzer oder automatisch mittels einer Recheneinheit festgelegt werden.

Dadurch werden die Vertiefungen im Detail festgelegt.

Vorteilhafterweise können bei der Konstruktion der Vertiefungen ein Muster der Vertiefungen, ein Verlauf der Vertiefungen und eine Symmetrie der Vertiefungen manuell durch einen Benutzer oder automatisch mittels einer Recheneinheit festgelegt werden.

Dadurch erfolgt die Konstruktion der Vertiefungen automatisch.

Vorteilhafterweise kann das zu konstruierende Zahnersatzteil eine Brücke bestehend aus mehreren Brückengliedern sein, wobei die Verteilungen der Vertiefungen an den einzelnen Brückengliedern aufeinander abgestimmt werden, indem eine auf die Brücke einwirkende Kraft mit mindestens einer bestimmten Kraftrichtung berücksichtigt wird.

Dadurch wird die Stabilität der Kleberverbindung der Brücke verbessert.

Vorteilhafterweise können die Vertiefungen bezüglich ihrer Form, Größe, Tiefe und/oder Verteilung in Abhängigkeit von einem verwendeten Kleber, von einem verwendeten Material des herzustellenden Zahnersatzteils und/oder in Abhängigkeit davon, ob ein additives oder ein subtraktives Herstellungsverfahren verwendet wird, manuell durch einen Benutzer oder automatisch mittels einer Recheneinheit festgelegt werden.

Dadurch wird die Stabilität der Klebeverbindung bei der Verwendung eines bestimmten Klebers und eines bestimmten Materials des Zahnersatzteils verbessert.

Vorteilhafterweise kann das Zahnersatzteil aus mindestens zwei Klebeteilen bestehen, wobei an einer ersten Klebefläche eines ersten Klebeteils und an einer zweiten Klebefläche eines zweiten Klebeteils die Vertiefungen konstruiert werden.

Dadurch werden also die Klebepartner bzw. Klebeteile an den Klebeflächen mit den Vertiefungen versehen, um die Stabilität der Klebeverbindung zu verbessern.

Die Erfindung betrifft weiterhin ein Verfahren zur Herstellung eines Zahnersatzteils unter Verwendung eines 3D-Modells. Das 3D-Modell wurde dabei nach dem oben erwähnten Verfahren konstruiert.

Nach diesem Verfahren wird das Zahnersatzteil unter Verwendung des geplanten 3D-Modelles hergestellt.

Ein Vorteil dieses Herstellungsverfahrens besteht darin, dass die Herstellung des Zahnersatzteiles vollautomatisch nach dem konstruierten 3D-Modell mit Vertiefungen erfolgen kann.

Vorteilhafterweise kann das Zahnersatzteil unter Verwendung eines CAD/CAM-Verfahrens aus einem Rohling hergestellt werden, wobei unter Verwendung des konstruierten 3D-Modells das Zahnersatzteil mit den konstruierten Vertiefungen in einem Verfahrensschritt hergestellt wird.

Das CAD/CAM-Verfahren kann mittels einer herkömmlichen CAD/CAM-Vorrichtung durchgeführt werden. Eine herkömmliche CAD/CAM-Vorrichtung umfasst dabei eine CAD-Einheit, wie einen Computer zur Konstruktion des 3D-Modells, und eine CAM-Einheit, wie eine Bearbeitungsmaschine mit beispielsweise vier Bearbeitungsachsen oder fünf Bearbeitungsachsen und einen CAM-Computer zur Berechnung der Maschinenbewegungen der Bearbeitungsmaschine.

Dabei wird ein Rohling aus einem keramischen Material in die Bearbeitungsmaschine gespannt und von der Bearbeitungsmaschine automatisch bearbeitet, wobei nach dem konstruierten 3D-Modell das Zahnersatzteil herausgefräst wird. Nach dieser Ausführungsform des Herstellungsverfahrens wird also das Zahnersatzteil mit den Vertiefungen nach dem konstruierten 3D-Modell in einem Verfahrensschritt hergestellt.

Vorteilhafterweise kann das Zahnersatzteil unter Verwendung eines CAD/CAM-Verfahrens aus einem Rohling hergestellt werden, wobei in einem ersten Verfahrensschritt unter Verwendung des konstruierten 3D-Modells das Zahnersatzteil ohne Vertiefungen hergestellt wird, wobei in einem zweiten Verfahrensschritt die konstruierten Vertiefungen nachträglich unter Verwendung des CAD/CAM-Verfahrens ausgearbeitet werden.

Bei dieser Ausführungsform des Herstellungsverfahrens wird zunächst in einem ersten Verfahrensschritt das Zahnersatzteil ohne Vertiefungen hergestellt und in einem zweiten Verfahrensschritt werden die Vertiefungen nachträglich ausgearbeitet.

Die Bearbeitungsmaschine kann auch nur drei Arbeitsachsen aufweisen. Als Bearbeitungswerkzeuge können herkömmliche zylindrische Bearbeitungswerkzeuge oder Hinterschnittfräser verwendet werden.

Vorteilhafterweise kann das Zahnersatzteil unter Verwendung des CAD/CAM-Verfahrens mittels einer CAD/CAM-Vorrichtung umfassend eine CAD-Einheit, eine CAM-Einheit und eine Steuervorrichtung für Maschinenbewegungen einer Herstellungsmaschine, hergestellt werden, wobei die Vertiefungen mittels einer Software der CAD-Einheit, mittels einer Software der CAM-Einheit und/oder mittels der Steuervorrichtung für Maschinenbewegungen konstruiert werden.

Dadurch werden die Vertiefungen also bereits bei der Konstruktion mittels der Software der CAD-Einheit, mittels der Software der CAM-Einheit oder erst mittels der Steuervorrichtung für Maschinenbewegungen hinzugefügt.

Vorteilhafterweise kann zum Herausarbeiten der Vertiefungen ein spezielles Werkzeug verwendet werden, das die Form der herzustellenden Vertiefung bzw. der herzustellenden Vertiefungen aufweist, so dass eine Vertiefung bzw. mehrere Vertiefungen in einem Verfahrensschritt bei einer einmaligen Verwendung des speziellen Werkzeugs herausgearbeitet werden.

Dadurch können die Vertiefungen mittels der speziellen Werkzeuge schneller hergestellt werden.

Vorteilhafterweise kann das Zahnersatzteil unter Verwendung eines additiven Herstellungsverfahrens hergestellt werden. Das additive Herstellungsverfahren kann beispielsweise mittels eines herkömmlichen 3D-Druckers zur Herstellung von keramischen Zahnersatzteilen verwendet werden. Der 3D-Drucker kann beispielsweise auf einem SLS-Lasersinterverfahren und/oder einem Stereolithografieverfahren beruhen.

Bei einem 3D-Drucker, basierend auf einem SLS-Lasersinterverfahren, wird das Drucken von dreidimensionalen Objekten ohne Bindemittel oder zusätzliche Montageschritte ermöglicht. Das 3D-Modell des herzustellenden Objekts wird mittels einer speziellen Slicing-Software in viele horizontale Ebenen zerlegt und als Steuerbefehle an den 3D-Drucker weitergeleitet. Der 3D-Drucker baut dann aus einem Puderbett des verwendeten Materials Schicht für Schicht das Objekt auf, wobei einzelne Puderpartikel durch eine hohe Temperatur des Lasers miteinander verschmolzen werden. Anschließend wird das Objekt abgesenkt und eine neue Pulverschicht aufgetragen. Der Vorgang wird so lange wiederholt, bis das gesamte dreidimensionale Objekt vollständig ausgedruckt ist.

Das Verwenden eines additiven Herstellungsverfahrens hat den Vorteil, dass nicht nur Bohrungen oder konisch zulaufende Öffnungen als Vertiefungen möglich sind, sondern auch Vertiefungen möglich sind, die einen engen Eingangskanal und ein breites Volumen innerhalb des Materials des Zahnersatzteils aufweisen. Solche Vertiefungen ermöglichen eine stabilere Klebeverbindung.

Eine erste Form der Vertiefung weist einen zylinderförmigen Kanal mit einem ersten festgelegten Durchmesser und eine Kavität mit einem zweiten festgelegten Durchmesser auf, der den ersten Durchmesser des Kanals überschreitet.

Dadurch wird die Klebeverbindung stabiler, da der Kleber durch den zylinderförmigen Kanal in die Kavität gedrückt wird, anschließend fest wird und dadurch ein Formschluss entsteht.

Eine zweite Form mehrerer Vertiefungen weist die Form von Kanälen aufweisen, die an ihren Enden innerhalb des Zahnersatzteils durch einen weiteren Kanal miteinander verbunden sind.

Dadurch wird die Stabilität der Klebeverbindung verbessert, da ein Formschluss durch den weiteren Kanal zwischen den beiden Eintrittskanälen entsteht.

Vorteilhafterweise kann das Material des Zahnersatzteils ein Kunststoff, eine Keramik, ein Metall oder eine Mischung aus einem Kunststoff und einer Keramik sein.

Dadurch wird ein herkömmliches Material zur Herstellung des Zahnersatzteils verwendet.

Ein weiterer Gegenstand der Erfindung ist ein Zahnersatzteil mit mindestens einer Klebefläche, wobei an der Klebefläche des Zahnersatzteils Vertiefungen angeordnet sind.

Das Zahnersatzteil kann dabei unter Verwendung des oben genannten Konstruktionsverfahrens konstruiert sein und unter Verwendung des oben genannten Herstellungsverfahrens hergestellt sein.

Ein Vorteil eines solchen Zahnersatzteils mit Vertiefungen besteht darin, dass die Stabilität der Klebeverbindung im Vergleich zu herkömmlichen Zahnersatzteilen stabiler ist.

Vorteilhafterweise kann die Klebefläche des Zahnersatzteils so geformt sein, dass beim Kleben des Zahnersatzteils auf eine Präparation lediglich Kontaktflächen der Klebefläche im äußeren Bereich der Klebefläche in Kontakt mit der Präparation kommen, wobei die Klebefläche im inneren Bereich der Klebefläche keinen direkten Kontakt mit der Präparation aufweist, so dass ein ununterbrochener Klebefilm bestehend aus einem Klebstoff zwischen der Klebefläche des Zahnersatzteils und der Präparation gebildet wird.

Dadurch wird die Stabilität der Klebeverbindung verbessert, da der Kleberfilm nicht unterbrochen wird.

Vorteilhafterweise kann das Zahnersatzteil aus mindestens zwei Klebeteilen bestehen, wobei an einer ersten Klebefläche eines ersten Klebeteils und an einer zweiten Klebefläche eines zweiten Klebeteils zur Verklebung der beiden Teile miteinander die Vertiefungen angeordnet sind.

Dadurch wird die Klebeverbindung zwischen den beiden Klebeteilen verbessert.

Vorteilhafterweise kann das Zahnersatzteil aus mindestens zwei Klebeteilen eine Gerüst-Verblendung, ein Multi-Unit-Zahnersatzteil, ein Zahnersatzteil umfassend eine Mesostruktur einer aufzusetzenden Krone und/oder ein Zahnersatzteil umfassend eine Ti-Base mit mindestens einer aufzusetzenden Krone sein.

### Kurzbeschreibung der Zeichnungen

Die Erfindung wird anhand der Zeichnungen erläutert. Es zeigt, die
- Fig. 1: eine Skizze zur Verdeutlichung des Verfahrens, die
- Fig. 2: ein Zahnersatzteil, das mittels eines CAM/CAD-Verfahrens nach einem konstruierten 3D-Modell hergestellt wurde.

### Ausführungsbeispiele

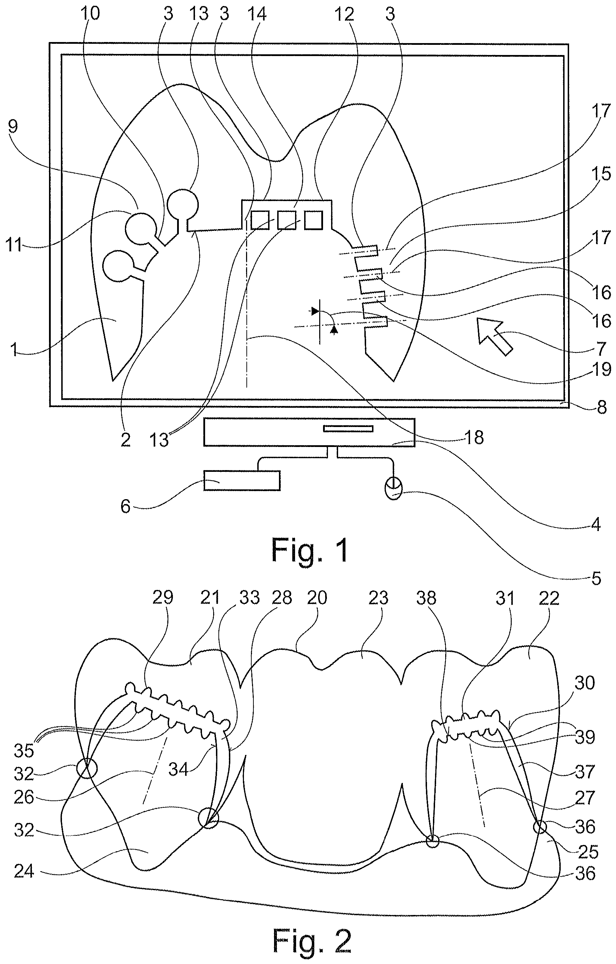

Die Fig. 1 zeigt eine Skizze zur Verdeutlichung des Verfahrens zur Konstruktion mindestens eines Zahnersatzteiles mit mindestens einer Klebefläche, wobei ein 3D-Modell 1 des Zahnersatzteils konstruiert wird. An einer Klebefläche 2 werden dabei Vertiefungen 3 konstruiert. Das 3D-Modell 1 wird mittels einer CAD-Vorrichtung, wie mittels eines Computers 4, konstruiert. An den Computer 4 sind Eingabemittel, wie eine Maus 5 und eine Tastatur 6, angeschlossen, die dem Benutzer die Bearbeitung des 3D-Modells 1 über einen Cursor 7 erlauben. Das 3D-Modell 1 wird mittels einer Anzeigevorrichtung 8, wie eines Monitors, grafisch dargestellt, die an den Computer 4 angeschlossen ist. Eine erste Vertiefungsart 9 weist einen zylinderförmigen Kanal 10 und eine breitere Kavität 11 im Inneren des 3D-Modells 1 auf. Eine zweite Vertiefungsart 12 weist mindestens zwei zylinderförmige Eintrittskanäle 13 und einen Querkanal 14 auf, der die Enden der Eintrittskanäle im Inneren des 3D-Modells 1 verbindet. Eine dritte Vertiefungsart 15 (nicht beansprucht) weist zylinderförmige Eintrittskanäle 16 auf, deren Achsen 17 einen Winkel zu einer Einschubachse 18 des 3D-Modells 1 haben, der 45° überschreitet. Durch den Winkel 19 werden also ein Formschluss und damit eine höhere Stabilität der Klebeverbindung gewährleistet.

Die Fig. 2 zeigt ein nicht erfindungsgemäßes Zahnersatzteil 20, das mittels eines CAM/CAD-Verfahrens nach einem konstruierten 3D-Modell 1 hergestellt wurde. Das Zahnersatzteil 20 ist im vorliegenden Fall eine Brücke aus einem ersten Brückenglied 21, einem zweiten Brückenglied 22 und einem Zwischenglied 23. Die Brücke wird auf einen ersten Zahnstumpf 24 und einen zweiten Zahnstumpf 25 geklebt. Der erste Zahnstumpf 24 weist dabei eine erste Einschubrichtung 26 auf. Der zweite Zahnstumpf 25 weist eine zweite Einschubrichtung 27 auf. An einer ersten Klebefläche 28 des ersten Brückenglieds 21 sind erste Vertiefungen 29 vorgesehen. An einer zweiten Klebefläche 30 des zweiten Brückenglieds 22 sind zweite Vertiefungen 31 vorgesehen. Die Vertiefungen 29 und 31 sind dabei als kugelförmige Vertiefungen ausgeführt. Die erste Klebefläche 28 des Zahnersatzteils 20 ist so geformt, dass das Zahnersatzteil 20 beim Kleben auf den Zahnstumpf 24 einer Präparation lediglich erste Kontaktflächen im äußeren Bereich der Klebefläche 28 in Kontakt mit dem ersten Zahnstumpf 24 kommen. Die Klebefläche im inneren Bereich weist keinen direkten Kontakt mit dem Zahnstumpf 24 auf, so dass ein ununterbrochener Klebefilm 33, bestehend aus dem Klebstoff, zwischen der Klebefläche 28 und einer Klebefläche 34 des ersten Zahnstumpfes 24 gebildet wird. An der Klebefläche 34 des Zahnstumpfes 24 wurden ebenfalls Vertiefungen 35 angebracht, um die Stabilität der Klebeverbindung zu verbessern. Die zweite Klebefläche 30 des zweiten Brückengliedes 22 weist ebenfalls Flächen 36 im äußeren Bereich der Klebefläche 30 und einen ununterbrochenen Klebefilm 37 auf. An einer okklusalen Fläche 38 des zweiten Zahnstumpfes 25 sind ebenfalls Vertiefungen 39 angebracht, um die Stabilität der Klebeverbindung zu verbessern.

## Patentansprüche

1. Verfahren zur Konstruktion mindestens eines Zahnersatzteils (20) oder eines Brackets mit mindestens einer Klebefläche (2), wobei ein 3D-Modell (1) des Zahnersatzteils (20) oder des Brackets konstruiert wird, **dadurch gekennzeichnet, dass** an der Klebefläche (2) des 3D-Modells (1) Vertiefungen (3, 9, 12, 15, 29, 31) konstruiert werden, wobei mindestens eine der Vertiefungen (9) eine erste Form hat, die einen Eingangskanal (10) mit einem ersten festgelegten Durchmesser und ein breiteres Volumen innerhalb des 3D-Modells (1) mit einem zweiten festgelegten Durchmesser aufweist, der den ersten Durchmesser des Eingangskanals (10) überschreitet und/oder wobei mehrere der Vertiefungen (12) eine zweite Form mit mehreren Kanälen (13) aufweisen, wobei die Kanäle (13) an ihren Enden innerhalb des 3D-Modells (1) durch einen weiteren Kanal (14) miteinander verbunden sind.

2. Verfahren nach Anspruch 1, **dadurch gekennzeichnet, dass** bestimmte Flächenbereiche der Klebefläche (2) des 3D-Modells (1) ausgewählt werden, die mit den Vertiefungen (3, 9, 12, 15, 29, 31) versehen werden.

3. Verfahren nach Anspruch 2, **dadurch gekennzeichnet, dass** die Auswahl der Flächenbereiche manuell durch einen Benutzer oder automatisch mittels einer Recheneinheit (4) erfolgt.

4. Verfahren nach Anspruch 3, **dadurch gekennzeichnet, dass** bei der automatischen Auswahl der Flächenbereiche eine Einschubachse (18) des 3D-Modells (1) bestimmt wird, wobei eine Flächennormale der Klebefläche (2) des 3D-Modells (1) bestimmt wird, wobei Flächenbereiche der Klebefläche (2) ausgewählt werden, die höchstens einen festgelegten Wert eines Winkels zwischen der Einschubachse (18) und der Flächennormale dieser Flächenbereiche aufweisen.

5. Verfahren nach Anspruch 4, **dadurch gekennzeichnet, dass** der festgelegte Wert des Winkels zwischen der Einschubachse und der Flächennormale der Flächenbereiche höchstens 60° beträgt.

6. Verfahren nach einem der Ansprüche 1-5, **dadurch gekennzeichnet, dass** die Vertiefungen (3, 9, 12, 15, 29, 31) bezüglich ihrer Form, Größe, Tiefe und/oder Verteilung in Abhängigkeit von einem verwendeten Kleber, von einem verwendeten Material des herzustellenden Zahnersatzteils (20) und/oder in Abhängigkeit davon, ob ein additives oder ein subtraktives Herstellungsverfahren verwendet wird, manuell durch einen Benutzer oder automatisch mittels einer Recheneinheit (4) festgelegt werden.

7. Verfahren nach einem der Ansprüche 1-6, **dadurch gekennzeichnet, dass** das Zahnersatzteil (20) aus mindestens zwei Klebeteilen besteht, wobei an einer ersten Klebefläche (28) eines ersten Klebeteils (21) und an einer zweiten Klebefläche (34) eines zweiten Klebeteils (24) die Vertiefungen (29, 35) konstruiert werden.

8. Verfahren zur Herstellung eines Zahnersatzteils (20) unter Verwendung eines 3D-Modells (1), **dadurch gekennzeichnet, dass** das 3D-Modell (1) nach einem der Ansprüche 1-7 konstruiert wurde.

9. Verfahren nach Anspruch 8, **dadurch gekennzeichnet, dass** das Zahnersatzteil (1) unter Verwendung eines CAD/CAM-Verfahrens aus einem Rohling hergestellt wird, wobei unter Verwendung des konstruierten 3D-Modells (1) das Zahnersatzteil (20) mit den konstruierten Vertiefungen (3, 9, 12, 15, 29, 31) in einem Verfahrensschritt hergestellt wird.

10. Verfahren nach Anspruch 9, **dadurch gekennzeichnet, dass** das Zahnersatzteil (1) unter Verwendung eines CAD/CAM-Verfahrens aus einem Rohling hergestellt wird, wobei in einem ersten Verfahrensschritt unter Verwendung des konstruierten 3D-Modells (1) das Zahnersatzteil (20) ohne Vertiefungen hergestellt wird, wobei in einem zweiten Verfahrensschritt die konstruierten Vertiefungen (3, 9, 12, 15, 29, 31) nachträglich unter Verwendung des CAD/CAM-Verfahrens ausgearbeitet werden.

11. Verfahren nach Anspruch 9 oder 10, **dadurch gekennzeichnet, dass** das Zahnersatzteil unter Verwendung des CAD/CAM-Verfahrens mittels einer CAD/CAM-Vorrichtung umfassend eine CAD-Einheit, eine CAM-Einheit und eine Steuervorrichtung für Maschinenbewegungen einer Herstellungsmaschine, hergestellt wird, wobei die Vertiefungen mittels einer Software der CAD-Einheit, mittels einer Software der CAM-Einheit und/oder mittels der Steuervorrichtung für Maschinenbewegungen konstruiert werden.

12. Verfahren nach einem der Ansprüche 9-11, **dadurch gekennzeichnet, dass** zum Herausarbeiten der Vertiefungen (3, 9, 12, 15, 29, 31) ein spezielles Werkzeug verwendet wird, welches die Form der herzustellen Vertiefung bzw. der herzustellenden Vertiefungen aufweist, so dass eine Vertiefung bzw. mehrere Vertiefungen in einem Verfahrensschritt bei einer einmaligen Verwendung des speziellen Werkzeugs herausgearbeitet werden.

13. Verfahren nach Anspruch 8, **dadurch gekennzeichnet, dass** das Zahnersatzteil (20) unter Verwendung eines additiven Herstellungsverfahrens hergestellt wird.

14. Zahnersatzteil (20) mit mindestens einer Klebefläche (2, 28, 30), **dadurch gekennzeichnet, dass** an der Klebefläche (2, 28, 30) des Zahnersatzteils (20) Vertiefungen (3, 9, 12, 15, 29, 31) angeordnet sind, wobei das Zahnersatzteil (20) unter Verwendung eines Verfahrens nach einem der Ansprüche 1-7 konstruiert ist.

15. Zahnersatzteil nach Anspruch 14, **dadurch gekennzeichnet, dass** das Zahnersatzteil (20) unter Verwendung eines Verfahrens nach einem der Ansprüche 8-13 hergestellt ist.

## Claims

1. A method for constructing at least one dental prosthetic part (20) or a bracket having at least one adhesive surface (2), wherein a 3D model (1) is made of the dental prosthetic part (20) or the bracket, **characterised in that** recesses (3, 9, 12, 15, 29, 31) are constructed on the adhesive surface (2) of the 3D model (1), wherein at least one of the recesses (9) has a first shape comprising an input channel (10) with a first fixed diameter and a wider volume within the 3D model (1) with a second fixed diameter that exceeds the first diameter of the input channel (10), and/or wherein a plurality of the recesses (12) has a second shape with a plurality of channels (13), wherein within the 3D model (1) the channels (13) are connected to one another at the ends thereof by a further channel (14).

2. The method according to claim 1, **characterised in that** certain surface areas of the adhesive surface (2) of the 3D model (1) are selected, wherein these are provided with the recesses (3, 9, 12, 15, 29, 31).

3. The method according to claim 2, **characterised in that** the selection of surface areas is carried out manually by a user or automatically by means of a computer unit (4).

4. The method according to claim 3, **characterised in that** when the surface areas are selected automatically, an insertion axis (18) of the 3D model (1) is determined, wherein a surface normal of the adhesive surface (2) of the 3D model (1) is determined, wherein surface areas of the adhesive surface (2) are selected which have at most a defined value of an angle between the insertion axis (18) and the surface normal of these surface areas.

5. The method according to claim 4, **characterised in that** the defined value of the angle between the insertion axis and the surface normal of the surface areas is at most 60°.

6. The method according to any one of claims 1 to 5, **characterised in that** in terms of their shape, size, depth and/or distribution, the recesses (3, 9, 12, 15, 29, 31) are determined manually by a user or automatically by means of a computer unit (4), depending on the adhesive used, on the material used for the dental prosthetic part (20) to be produced and/or depending on whether an additive or a subtractive production method is used.

7. The method according to any one of claims 1 to 6, **characterised in that** the dental prosthetic part (20) consists of at least two adhesive parts, wherein the recesses (29, 35) are constructed on a first adhesive surface (28) of a first adhesive part (21) and on a second adhesive surface (34) of a second adhesive part (24).

8. The method for producing a dental prosthetic part (20) using a 3D model (1), **characterised in that** the 3D model (1) has been constructed according to any one of claims 1 to 7.

9. The method according to claim 8, **characterised in that** the dental prosthetic part (1) is produced from a blank using a CAD/CAM method, wherein the dental prosthetic part (20) having the constructed recesses (3, 9, 12, 15, 29, 31) is produced in one method step using the constructed 3D model (1).

10. The method according to claim 9, **characterised in that** the dental prosthetic part (1) is produced from a blank using a CAD/CAM method, wherein the dental prosthetic part (20) without recesses is produced in a first method step using the constructed 3D model (1), wherein the constructed recesses (3, 9, 12, 15, 29, 31) are subsequently carved out using the CAD/CAM method in a second method step.

11. The method according to claim 9 or claim 10, **characterised in that** the dental prosthetic part is produced using the CAD/CAM method by means of a CAD/CAM device comprising a CAD unit, a CAM unit and a control device for machine movements of a production machine, wherein the recesses are constructed using software from the CAD unit, using software from the CAM unit and/or using the control device for machine movements.

12. The method according to any one of claims 9 to 11, **characterised in that** a special tool is used to carve out the recesses (3, 9, 12, 15, 29, 31), which has the shape of the recess or the recesses to be produced, so that one or a plurality of recesses is carved out in one method step with a single use of the special tool.

13. The method according to claim 8, **characterised in that** the dental prosthetic part (20) is produced using an additive production method.

14. A dental prosthetic part (20) having at least one adhesive surface (2, 28, 30), **characterised in that** recesses (3, 9, 12, 15, 29, 31) are arranged on the adhesive surface (2, 28, 30) of the dental prosthetic part (20), wherein the dental prosthetic part (20) is constructed using a method according to any one of claims 1 to 7.

15. The dental prosthetic part according to claim 14, **characterised in that** the dental prosthetic part (20) is produced using a method according to any one of claims 8 to 13.

## Revendications

1. Procédé de réalisation d'au moins une élément prothétique dentaire (20) ou d'un verrou orthodontique doté d'au moins une surface adhésive (2), un modèle 3D (1) de l'élément prothétique dentaire (20) ou du verrou orthodontique étant réalisé, **caractérisé en ce que** des évidements (3, 9, 12, 15, 29, 31) sont réalisés sur la surface adhésive (2) du modèle 3D (1), au moins l'un des évidements (9) ayant une première forme, qui a un canal d'entrée (10) avec un premier diamètre fixe et un plus large volume dans le modèle 3D (1) avec un second diamètre fixe supérieur au premier diamètre du canal d'entrée (10), et/ou une pluralité des évidements (12) ayant une seconde forme avec une pluralité de canaux (13), les canaux (13) étant reliés les uns aux autres à leur extrémité dans le modèle 3D (1) par un autre canal (14).

2. Procédé selon la revendication 1, **caractérisé en ce qu'**on sélectionne certaines zones de la surface adhésive (2) du modèle 3D (1) pourvues des évidements (3, 9, 12, 15, 29, 31).

3. Procédé selon la revendication 2, **caractérisé en ce que** les zones de surface sont sélectionnées manuellement par un utilisateur ou automatiquement au moyen d'une unité de calcul (4).

4. Procédé selon la revendication 3, **caractérisé en ce que** lorsque les zones de surface sont sélectionnées automatiquement, un axe d'insertion (18) du modèle 3D (1) est déterminé, une normale à la surface de la surface adhésive (2) du modèle 3D (1) est déterminée, les zones de la surface adhésive (2), ayant au maximum une valeur fixe d'un angle entre l'axe d'insertion (18) et la normale à la surface de ces zones de surface étant sélectionnées.

5. Procédé selon la revendication 4, **caractérisé en ce que** la valeur fixe de l'angle entre l'axe d'insertion et la normale à la surface des zones de surfaces est d'au plus 60°.

6. Procédé selon l'une des revendications 1 à 5, **caractérisé en ce que** les évidements (3, 9, 12, 15, 29, 31) peuvent être déterminés en termes de forme, taille, profondeur et/ou répartition, manuellement par un utilisateur ou automatiquement au moyen d'une unité de calcul (4), en fonction de l'adhésif utilisé, du matériau utilisé de l'élément prothétique dentaire (20) à produire et/ou en fonction que l'on fait appel à un procédé de production additive ou soustractive.

7. Procédé selon l'une des revendications 1 à 6, **caractérisé en ce que** l'élément prothétique dentaire (20) est constitué d'au moins deux parties adhésives, les évidements (29, 35) étant réalisés sur une première surface adhésive (28) d'une première partie adhésive (21) et sur une seconde surface adhésive (34) d'une seconde partie adhésive (24).

8. Procédé de réalisation d'un élément prothétique dentaire (20) à l'aide d'un modèle 3D (1), **caractérisé en ce que** le modèle 3D (1) est réalisé selon l'une des revendications 1 à 7.

9. Procédé selon la revendication 8, **caractérisé en ce que** l'élément prothétique dentaire (1) est fabriqué à partir d'une ébauche selon un procédé CAO/FAO, l'élément prothétique dentaire (20) est fabriqué avec les évidements réalisés (3, 9, 12, 15, 29, 31) en fonction du modèle 3D (1) réalisé, en une seule étape de traitement.

10. Procédé selon la revendication 9, **caractérisé en ce que** l'élément prothétique dentaire (1) est fabriqué à partir d'une ébauche selon un procédé CAO/FAO, l'élément prothétique dentaire (20) est fabriqué sans évidements dans une première étape de procédé en fonction du modèle 3D (1) réalisé, les évidements (3, 9, 12, 15, 29, 31) réalisés étant ensuite élaborés selon le procédé CAO/FAO dans une seconde étape de traitement.

11. Procédé selon la revendication 9 ou 10, **caractérisé en ce que** l'élément prothétique dentaire est fabriqué selon le procédé CAO/FAO au moyen d'un dispositif CAO/FAO comprenant une unité CAO, une unité FAO et un dispositif de commande pour les mouvements d'une machine de fabrication, les évidements étant réalisés à l'aide d'un logiciel de l'unité CAO, à l'aide d'un logiciel de l'unité FAO et/ou à l'aide du dispositif de commande pour les mouvements de la machine.

12. Procédé selon l'une des revendications 9 à 11, **caractérisé en ce qu'**un outil spécial sert à élaborer les évidements (3, 9, 12, 15, 29, 31), ledit outil ayant la forme de l'évidement à produire ou des évidements à produire, de sorte qu'un évidement ou plusieurs évidements soient élaborés en une seule étape de traitement au moyen d'une seule utilisation de l'outil spécial.

13. Procédé selon la revendication 8, **caractérisé en ce que** l'élément prothétique dentaire (20) est fabriqué selon le procédé de production additive.

14. Élément prothétique dentaire (20) doté d'au moins une surface adhésive (2, 28, 30), **caractérisé en ce que des** évidements (3, 9, 12, 15, 29, 31) sont disposés sur la surface adhésive (2, 28, 30) de l'élément prothétique dentaire (20), l'élément prothétique dentaire (20) étant réalisé selon le procédé selon l'une des revendications 1 à 7.

15. Élément prothétique dentaire selon la revendication 14, **caractérisé en ce que** l'élément prothétique dentaire (20) est fabriqué selon le procédé selon l'une des revendications 8 à 13.
